# EUROPEAN PATENT APPLICATION

(11) **EP 3 663 357 A1**
(43) Date of publication of application: **10.06.2020**
(21) Application number: 18840239.0
(22) Date of filing: 31.07.2018
(51) Int. Cl.: C08L 75/04, C08G 18/00, C08G 18/32, C08K 3/38, C08L 39/00, C08L 39/02, C08L 79/00, C08L 79/02, C08L 101/02, C08G 101/00

(54) **ALDEHYDE SCAVENGER FOR POLYURETHANE, POLYURETHANE, AND METHOD FOR PRODUCING POLYURETHANE**

(30) Priority: 31.07.2017 JP 2017148395
(71) Applicant: Bridgestone Corporation, Tokyo 104-8340 (JP)
(72) Inventor: NISHIKITA Naoko, Tokyo 104-8340 (JP); SEGUCHI Hideharu, Tokyo 104-8340 (JP)
(74) Representative: Oxley, Robin John George
(86) International application number: PCT/JP2018/028622
(87) International publication number: WO 2019/026897

(57) **Abstract**

An aldehyde scavenger for polyurethanes, including a reducing agent, a basic compound, an amine polymer having amino group-containing repeating units, and water. The reducing agent is preferably a complex metal hydride, more preferably sodium borohydride, and the amine polymer having amino group-containing repeating units is preferably at least one amine polymer selected from the group consisting of polyvinylamine, polyvinylalkylamines, polyalkyleneimines, polyaniline and salts thereof.

## Description

### [Technical Field]

The present invention relates to an aldehyde scavenger for polyurethanes, a polyurethane, and a method for producing a polyurethane.

Priority is claimed on Japanese Patent Application No. 2017-148395, filed on July 31, 2017, the content of which is incorporated herein by reference.

### [Background Art]

It has been demanded in recent years to make utmost efforts to prevent diffusion of aldehydes (formaldehyde and the like) which belong to the class of volatile organic compounds (VOC). Also in the case of interior of vehicles such as automobiles, the same situation as mentioned above applies, and it has become necessary to take measures against VOCs.

For example, flexible urethane foams with high degree of cushioning have been used for seat pads of vehicle seats. If these urethane foams contain aldehydes derived from the raw materials of the urethane foam, or aldehydes generated during the urethanization reaction, such aldehydes diffuse from the pads, and therefore reduction of the generation of these aldehydes has been desired.

As a conventional technique for reducing the generation of aldehydes, a technique is known in which sodium borohydride (NaBH₄) is added as a reducing agent to an aqueous solution of a catalyst used for production of polyurethane (see Patent Document 1). In addition, because solid sodium borohydride does not dissolve in a polyol as it is, it is used in a state of an aqueous solution in Patent Document 1 and the like.

### [Citation List]

### [Patent Document]

### [Patent Document 1]

Japanese Patent Application Unexamined Publication No. 2005-154599

### [Summary of Invention]

### [Technical Problem]

However, sodium borohydride itself belongs to water-reactive substances which in contact with water emit flammable gases as specified in Class 3 of hazardous materials in the Japanese Fire Service Act, and therefore, is not stable in the state of an aqueous solution. When sodium borohydride is dissolved in water as done in Patent Document 1, its aldehyde reduction activity promptly disappears, resulting in extremely poor storage stability as well as causing safety problem.

Furthermore, there is a problem that physical properties of the obtained urethane deteriorate when the aqueous solution of reducing agent used is one obtained by dissolving sodium hydroxide so as to stabilize the solution under alkaline conditions. Therefore, it is difficult to apply sodium borohydride as a reducing agent to industrial scale production of a polyurethane.

An object of the present invention is to provide an aldehyde scavenger for polyurethanes which is excellent in storage stability and exhibits an excellent effect of reducing aldehydes without causing deterioration in physical properties of polyurethanes; a polyurethane produced using the aldehyde scavenger; and a method for producing a polyurethane using the aldehyde scavenger.

### [Solution to Problem]

A first aspect of the present invention is an aldehyde scavenger for polyurethanes, which contains a reducing agent, a basic compound, an amine polymer having amino group-containing repeating units, and water.

### [Effects of Invention]

The aldehyde scavenger for polyurethanes of the present invention is excellent in storage stability and exhibits an excellent effect of reducing aldehydes without causing deterioration in physical properties of polyurethanes.

### [Description of Embodiments]

Hereinafter, preferred embodiments of the present invention will be explained, but the present invention is not limited to such embodiments.

### <<Aldehyde scavenger for polyurethanes>>

The aldehyde scavenger (for polyurethanes) of the present invention contains a reducing agent, a basic compound, an amine polymer having amino group-containing repeating units, and water. More specifically, the aldehyde scavenger of the present invention contains a basic aqueous solution having a reducing agent dissolved therein, and an amine polymer having amino group-containing repeating units. As for such a reducing agent, it is preferable that the reducing agent is substantially completely dissolved in the basic aqueous solution; namely, it is preferable that there is no visually observable undissolved solid matter.

### <Reducing agent>

The reducing agent is not particularly limited as long as the reducing agent can reduce aldehydes such as formaldehyde and acetaldehyde. As the reducing agent, a complex metal hydride is preferably used. Specific examples of the complex metal hydride include sodium borohydride (NaBH₄), lithium aluminum hydride (LiAlH₄), lithium borohydride (LiBH₄), sodium cyanotrihydroborate (NaBH₃CN), and the like. Examples of the reducing agent other than the complex metal hydride include sodium thiosulfate (Na₂S₂O₃), sodium sulfite (Na₂SO₃), and borane (BH₃, B₂H₆). Among these, sodium borohydride is preferable from the viewpoint of a balance between availability, aldehyde reduction activity, and handling convenience.

Further, each of the above-described reducing agents may be used alone, or two or more kinds thereof may be used in combination.

The amount of the reducing agent relative to the total mass of the aldehyde scavenger is preferably 1.0 to 15.0 % by mass, more preferably 1.0 to 10.0 % by mass, and even more preferably 1.0 to 5.0 % by mass. When the amount of the reducing agent relative to the total mass of the aldehyde scavenger is not less than the above lower limit value, a sufficient aldehyde reducing effect is easily obtained when the aldehyde scavenger is used for the production of a polyurethane. When the amount of the reducing agent relative to the total mass of the aldehyde scavenger is not more than the above upper limit value, the effect of stably storing the reducing agent is enhanced.

<Basic Compound>

In the present invention, the basic compound is dissolved in water and suppresses the decomposition of the reducing agent, thereby enhancing the storage stability.

Examples of the basic compound include alkali metal hydroxides. Specifically, lithium hydroxide, sodium hydroxide, potassium hydroxide, and the like can be used. From the viewpoint of availability, it is preferable to use sodium hydroxide.

Further, each of the above-described basic compounds may be used alone, or two or more kinds thereof may be used in combination.

The amount of the basic compound relative to the total mass of the aldehyde scavenger is preferably 0.1 to 10 % by mass, more preferably 0.1 to 3 % by mass, even more preferably 0.2 to 2 % by mass, and particularly preferably 0.3 to 1 % by mass. When the amount of the basic compound relative to the total mass of the aldehyde scavenger is within the above range, the effect of stably storing the reducing agent is enhanced.

### <Amine polymer with amino group-containing repeating units>

The aldehyde scavenger (for polyurethanes) of the present invention contains an amine polymer having amino group-containing repeating units.

The amine polymer is preferably at least one amine polymer selected from the group consisting of polyvinylamine, polyvinylalkylamines (polyallylamine, etc.), polyalkyleneimines, polyaniline, and salts thereof. For reducing the generation of aldehydes, polyalkyleneimines are preferable. Of the polyalkyleneimines, polyethyleneimine is more preferable.

Further, each of the above-described amine polymers may be used alone, or two or more kinds thereof may be used in combination.

Examples of the salt of the amine polymer include those in which some or all of the amine structural sites of the amine polymer are in the form of an ammonium salt. An example of the counter anion of the ammonium salt is a halogen ion.

The polyethyleneimines usable in the present invention are not complete linear polymers, but are polyethyleneimines each having a branched structure including a primary amino group, a secondary amino group (secondary amine structure), and a tertiary amino group (tertiary amine structure) in its molecular skeleton, wherein the primary amino group accounts for 20 mol % or more of the total amino groups. These features enable the improvement of the effect of reducing the generation of aldehydes.

For easy stirring, the viscosity of the amine polymer such as a polyethyleneimine is preferably 40000 (mPa·s-25 °C) or less, more preferably 20000 or less, and even more preferably 15000 or less.

The lower limit of the viscosity is not particularly limited and may be, for example, 50 (mPa·s-25 °C) or more, 100 or more, or 200 or more.

As the combination of the upper limit values and the lower limit values, for example, the viscosity may be 50 (mPa·s-25 °C) to 40000 (mPa·s-25 °C), 100 to 20000, or 200 to 15000.

In the present specification, the viscosity of the amine polymer can be measured by, for example, a B-type viscometer.

The amine polymer is preferably a polymer having at least one amine selected from the group consisting of a primary amine and a secondary amine (secondary amine structure) in its repeating units, and is more preferably a polymer having both of a primary amine and a secondary amine (secondary amine structure) in its repeating units. The amine polymer may contain a tertiary amine. The ratio (molar ratio) of primary amine : secondary amine : tertiary amine in the amine polymer is preferably 20 to 60 : 20 to 60 : 10 to 50.

In the present specification, the ratio (molar ratio) of a primary amine, a secondary amine, and a tertiary amine can be measured by, for example, nuclear magnetic resonance (NMR).

The amount of the amine polymer relative to the total mass of the aldehyde scavenger is preferably 10 to 90 % by mass, more preferably 35 to 90 % by mass, and even more preferably 45 to 90 % by mass. When the amount of the amine polymer relative to the total mass of the aldehyde scavenger is within the above range, the effect of stably storing the reducing agent is enhanced.

### <Water>

The water contained in the aldehyde scavenger is preferably ion exchange water from which metal ions or the like have been removed, or distilled water. The amount of water may be appropriately adjusted so that the amounts of the reducing agent, basic compound, and amine polymer with amino group-containing repeating units contained in the aldehyde scavenger fall within respective preferred ranges described above.

The aldehyde scavenger may be composed only of the reducing agent, the basic compound, the amine polymer having amino group-containing repeating units, and the water, or may further contain other compounds.

Examples of such other compounds include an amine compound having two or more active hydrogen groups. When the aldehyde scavenger further contains an amine compound having two or more active hydrogen groups, it is possible to suppress the decrease in physical properties of the polyurethane to be produced using the aldehyde scavenger.

### <Amine compound having two or more active hydrogen groups>

In the present specification, the term "active hydrogen group" means an isocyanate-reactive group, which means a hydroxyl group, an amino group, a carboxyl group, and the like.

The amine compound having two or more active hydrogen groups is preferably an alkanolamine, and more preferably an alkanolamine having a secondary amino group, from the viewpoint of suppressing deterioration in the physical properties of the polyurethane. Specific examples of the amine compound having two or more active hydrogen groups include primary amines such as ethylenediamine, xylylenediamine, and methylenebisorthochloroaniline, secondary amines such as diethanolamine and diisopropanolamine, and tertiary amines such as triethanolamine, N-methyl diethanolamine, N-phenyl diethanolamine, and the like. Among these, diethanolamine, diisopropanolamine, triethanolamine, and N-methyl diethanolamine, which are alkanolamines, are preferable, and diethanolamine which is an alkanolamine having a secondary amino group is particularly preferable.

Further, each of the above-described amine compounds may be used alone, or two or more kinds thereof may be used in combination.

In one aspect of the present invention, the amine compound having two or more active hydrogen groups may be a monomeric compound.

The amount of the amine compound relative to the total mass of the aldehyde scavenger is preferably 8 to 90 % by mass, more preferably 10 to 70 % by mass, and even more preferably 20 to 60 % by mass. When the amount of the amine compound relative to the total mass of the aldehyde scavenger is within the above range, appropriate amounts of the basic compound and the amine compound are allowed to be added to the polyurethane composition in the aldehyde scavenger. These compounds work in cooperation to enable suppression of the deterioration in physical properties of the polyurethane produced using the aldehyde scavenger.

### <<Polyurethane (1)>>

The polyurethane of the present invention can be obtained by reacting a polyol composition that contains a polyol, a catalyst, and the aldehyde scavenger for polyurethanes with a polyisocyanate. The polyol composition contains the aldehyde scavenger of the present invention. That is, the polyurethane of the present invention is a reaction product of a polyol composition that contains a polyol, a catalyst, and the aldehyde scavenger of the present invention with a polyisocyanate.

Specific form of the polyurethane of the present invention is not particularly limited as long as the effects of the present invention can be obtained, and the polyurethane may be, for example, in the form of a polyurethane foam. The polyurethane foam is preferably a flexible or semi-rigid polyurethane foam, and particularly preferably a flexible polyurethane foam. Hereinbelow, the flexible polyurethane foam will be described.

The flexible polyurethane foam is obtained by foam molding a polyol composition containing a polyol, a foaming agent, and a catalyst, together with a polyisocyanate. As a method for foam molding, for example, a one-shot method, a prepolymer method, a mechanical froth method, or the like can be adopted.

The method for foam molding for producing the polyurethane foam may be any of a slab molding method in which a mixture of a polyol composition and polyisocyanate is discharged onto a traveling conveyor belt so as to implement the foaming while moving the mixture on the conveyor belt, thereby obtaining a continuous polyurethane foam slab; a molding method in which the mixture is discharged into a mold so as to implement the foaming in the mold; or a mechanical froth method in which bubbles are mixed into the mixture by mechanical stirring.

### <Polyol composition>

### (Polyol)

A polyol component contained in the polyol composition contains a polyether polyol in which the average number of functional groups is 2 to 8, the hydroxyl value is 14 to 60 (mg KOH/g), and the amount of oxyethylene units is 0 to 30 % by mass (hereinafter referred to as "polyether polyol A"), from the viewpoint of moldability and mechanical properties of the polyurethane.

The average number of functional groups of the polyether polyol A is 2 to 8 and is preferably 2 to 6 and more preferably 2 to 5 from the viewpoint of the moldability and mechanical properties of the polyurethane.

The hydroxyl value of the polyether polyol A is 14 to 60 (mg KOH/g), preferably 17 to 50 (mg KOH/g), and more preferably 20 to 45 (mg KOH/g), from the viewpoint of curability and mechanical properties of the polyurethane.

In one aspect of the present invention, the hydroxyl value of the polyether polyol A is preferably 10 to 300 (mg KOH/g), more preferably 15 to 150 (mg KOH/g), and even more preferably 20 to 60 (mg KOH/g).

The hydroxyl value in the present invention can be measured by a method specified in JIS K 1557-1.

The amount of the oxyethylene unit relative to the total mass of the polyether polyol A is 0 to 30 % by mass, preferably 5 to 25 % by mass, and more preferably 5 to 20 % by mass, from the viewpoint of moldability and mechanical properties of the polyurethane.

The amount of the polyether polyol relative to the total mass of the polyol composition is preferably 10 to 90 % by mass, more preferably 20 to 80 % by mass, and even more preferably 30 to 70 % by mass.

Further, the amount of the polyether polyol A relative to the total mass of the polyether polyol contained in the polyol composition is preferably 1 to 99 % by mass, more preferably 5 to 95 % by mass, and even more preferably 10 to 90 % by mass.

The polyether polyol contained in the polyol composition may be of a single type or two or more types.

Examples of the polyether polyol A include a compound having a structure to which an alkylene oxide (hereinafter abbreviated as AO) is added to a compound (a polyhydric alcohol, a polyhydric phenol, an amine, a polycarboxylic acid, phosphoric acid, and the like) containing at least 2 (preferably 2 to 8) active hydrogens. Any of these may be used as long as it is a compound that can be generally used for production of a polyurethane foam. Among them, reaction products of polyhydric alcohols with AO are preferable from the viewpoint of the curability and mechanical properties of the polyurethane.

The AO to be added to the active hydrogen-containing compound is preferably an AO composed of a 1,2-AO having 3 or more carbon atoms and ethylene oxide (hereinafter abbreviated as EO). Examples of the 1,2-AO having 3 or more carbon atoms include 1,2-propylene oxide (hereinafter abbreviated as PO), 1,2-butylene oxide, styrene oxide, and the like, among which PO is preferable from the viewpoint of productivity.

The AO is preferably composed only of EO and a 1,2-AO having 3 or more carbon atoms but may be an adduct in which another AO is also added in an amount of 10 % by mass or less (more preferably 5 % by mass or less), based on the total mass of all AO. As another AO, an AO having 4 to 8 carbon atoms is preferable, the examples of which include 1,3-, 1,4-, and 2,3-butylene oxides, and the like. Two or more kinds thereof may be used.

As for the manner of addition of the AO, the addition may be either block addition or random addition, but it is preferable that an AO block is added to at least an active hydrogen terminal of the polyol.

In the present invention, the polyol component may contain another polyol (other than mentioned above) or another active hydrogen component (other than mentioned above) in addition to the aforementioned polyether polyol. Examples thereof include polyether polyols other than mentioned above, polyester polyols, polyhydric alcohols, polyols other than mentioned above, mono-ols, polymer polyols obtained by polymerizing vinyl monomers in such polyols, amines, a mixture thereof, and the like. Any of these may be used as long as they are generally used for production of a polyurethane.

The polyol composition may further contain polyols functioning as a cell-interconnecting agent for interconnecting cells of the flexible polyurethane foam. Any of such polyols can be used as long as they are generally used for production of a polyurethane.

### (Blowing Agent)

The blowing agent may be contained in the polyol composition, and water is preferably used as the blowing agent. Water reacts with polyisocyanate to generate carbon dioxide gas, and thus functions as the blowing agent.

The amount of water in the polyol composition is preferably from 1 to 7 parts by mass, and more preferably from 2 to 5 parts by mass, with respect to 100 parts by mass of the polyol in the polyol composition. With the amount within the above range, a flexible urethane foam having desired physical properties can be easily obtained. Further, it is possible to prevent deterioration of wet heat compression set characteristic of the resulting flexible urethane foam.

### (Catalyst)

Examples of the catalyst contained in the polyol composition include known catalysts used in the field of polyurethanes. Examples of the known catalysts include amine catalysts and tin catalysts.

In general, the known catalysts can be roughly categorized into gelling catalysts and blowing catalysts.

Gelling catalysts promote the synthesis of a polyurethane through a reaction between the polyol and the polyisocyanate. Catalysts with a blowing activity constant/gelation activity constant ratio (ratio of blowing activity constant relative to gelation activity constant) of 1 or less are called gelling catalysts.

Blowing catalysts promote foaming of a polyurethane more than gelation. Catalyst with a blowing activity constant/gelation activity constant ratio exceeding 1 are called blowing catalysts.

The gelation activity constant is a constant that determines a speed of the gelation reaction between polyols and polyisocyanates, and a higher value of this constant leads to a higher crosslink density of the resulting foam. Specifically, a reaction constant of the gelation reaction between tolylene diisocyanate and diethylene glycol is used as the gelation activity constant. Meanwhile, the blowing activity constant is a constant that determines a speed of the foaming reaction between polyisocyanates and water, and a higher value of this constant leads to a greater interconnection between cells of the resulting foam. Specifically, a reaction constant of the foaming reaction between tolylene diisocyanate and water is used as the blowing activity constant.

The gelation activity constant and the blowing activity constant are determined by known methods.

In the present invention, it is preferable to use a catalyst containing both a gelling catalyst and a blowing catalyst. The use of such a catalyst can improve the mechanical strength of the flexible urethane foam.

Examples of the gelling catalysts include tertiary amines such as triethylenediamine (TEDA), N,N,N',N'-tetramethylethylenediamine, N,N,N' ,N' -tetramethylpropylenediamine, N,N,N',N",N"-pentamethyl-(3-aminopropyl)ethylenediamine, N,N,N',N",N"-pentamethyldipropylenetriamine, N,N,N',N'-tetramethylguanidine, and 135-tris(N,N-dimethylaminopropyl)hexahydro-S-triazine; imidazoles such as 1-methylimidazole, 1,2-dimethylimidazole, and 1-isobutyl-2-methylimidazole; N,N,N',N'-tetramethythexamethylenediamine, N-methyl-N'-(2-dimethylaminoethyl) piperazine, N,N'-dimethylpiperazine, N-methylpiperazine, N-methylmorpholine, N-ethylmorpholine; 1,8-diazabicyclo[5.4.0]undecene-7,1,1'-(3-(dimethylamino)propyl)imino)bis(2-propanol) ; and the like. Among these, TEDA is preferable as the gelling catalyst.

Examples of the blowing catalysts include bis(2-dimethylaminoethyl) ether, N,N,N',N",N"-pentamethyldiethylenetriamine, N,N,N',N",N'",N"'-hexamethyltriethylenetetramine, and the like. Among these, bis(2-dimethylaminoethyl) ether is preferred as the blowing catalyst.

The amount of the amine catalyst in the polyol composition is preferably 0.1 to 5.0 parts by mass, more preferably 0.2 to 3.0 parts by mass, and even more preferably from 0.3 to 2.0 parts by mass, with respect to 100 parts by mass of the polyol in the polyol composition.

### (Foam stabilizer)

The polyol composition may contain a foam stabilizer. As the foam stabilizer, a known foam stabilizer used in the field of polyurethane foams can be applied, and examples thereof include a silicone foam stabilizer and the like.

The amount of the foam stabilizer in the polyol composition is preferably 0.1 to 5 parts by mass, more preferably 0.2 to 3 parts by mass, and even more preferably from 0.3 to 2.5 parts by mass, with respect to 100 parts by mass of the polyol in the polyol composition.

As described above, the polyol composition may contain the polyurethane aldehyde scavenger.

### (Aldehyde scavenger for polyurethanes)

The amount of the aldehyde scavenger for polyurethanes in the polyol composition is not particularly limited as long as a sufficient effect of reducing aldehydes is obtained, but the amount of the aldehyde scavenger is preferably an amount such that the amount of the reducing agent contained in the aldehyde scavenger for polyurethanes falls in a range of from 10 to 100 ppm, more preferably in a range of from 15 to 80 ppm, and even more preferably in the range of from 20 to 60 ppm, with respect to the total mass of the polyol in the polyol composition used for the production of a polyurethane. When the amount of the reducing agent is not less than the lower limit described above, a sufficient effect of reducing aldehydes is easily obtained. When the amount of the reducing agent is not more than the upper limit described above, deterioration in physical properties of the polyurethane can be suppressed.

The amount of the basic compound derived from the aldehyde scavenger in the polyol composition is preferably 1 to 100 ppm, more preferably 1 to 50 ppm, and even more preferably 1 to 10 ppm, with respect to the total mass of the polyol in the polyol composition. When the amount of the basic compound with respect to the total mass of the polyol is not less than the lower limit described above, the reducing agent in the polyol composition can be stably stored, so that the effect of reducing aldehyde generation can be obtained. When the amount of the basic compound with respect to the total mass of the polyol is not more than the upper limit described above, deterioration in physical properties of the polyurethane produced using the polyol composition can be suppressed.

The amount of the amine polymer with amino group-containing repeating units, which is derived from the above-mentioned aldehyde scavenger, in the polyol composition is preferably 0.01 to 0.11 % by mass, more preferably 0.04 to 0.11 % by mass, and even more preferably 0.05 to 0.11 % by mass, with respect to the total mass of the polyol in the polyol composition.

When the amount of the amine polymer with respect to the total mass of the polyol is not less than the lower limit described above, the reducing agent in the polyol composition can be stably stored, so that the effect of reducing aldehyde generation can be obtained. When the amount of the amine polymer with respect to the total mass of the polyol is not more than the upper limit described above, deterioration in physical properties of the polyurethane produced using the polyol composition can be suppressed.

The amount of the amine compound having two or more active hydrogen groups, which is derived from the above-mentioned aldehyde scavenger, in the polyol composition is preferably 0.01 to 0.10 % by mass, more preferably 0.01 to 0.06 % by mass, and even more preferably 0.01 to 0.05 % by mass, with respect to the total mass of the polyol in the polyol composition. When the amount of the amine compound with respect to the total mass of the polyol is not more than the upper limit described above, deterioration in physical properties of the polyurethane produced using the polyol composition can be suppressed.

With respect to the balance between the amounts of the amine polymer and the amine compound in the polyol composition, which are derived from the aldehyde scavenger, for stably storing the reducing agent in the polyol composition, it is preferable that the amounts are equivalent to each other or the amine polymer is contained in a larger amount than the amine compound.

### (Other optional components)

Various additives can be blended into the polyol composition as necessary.

Examples of such additives include a crosslinking agent, a colorant such as a pigment, a chain extender, a filler such as calcium carbonate, a flame retardant, an antioxidant, an ultraviolet absorber, a light stabilizer, a conductive substance such as carbon black, and an antibacterial agent. The blending amount of the additives is appropriately adjusted depending on the application and purpose.

### <Polyisocyanate>

As the isocyanate component used in the method for producing the flexible polyurethane foam of the present invention, those conventionally used for the polyurethane production can be used. Examples of such isocyanates include aromatic polyisocyanates, aliphatic polyisocyanates, alicyclic polyisocyanates, araliphatic polyisocyanates, modified products thereof (for example, a urethane group-, carbodiimide group-, allophanate group-, urea group-, biuret group-, isocyanurate group-, or oxazolidone group-containing modified product, and the like), and a mixture of two or more of these.

Examples of the aromatic polyisocyanate include aromatic diisocyanates having 6 to 16 carbon atoms (excluding carbons in the NCO group; the same applies to the following isocyanates), aromatic triisocyanates having 6 to 20 carbon atoms, crude products of these isocyanates, and the like. Specific examples thereof include 1,3- and/or 1,4-phenylene diisocyanate, 2,4- and/or 2,6-tolylene diisocyanate (TDI), crude TDI, 2,4'- and/or 4,4'-diphenylmethane diisocyanate (MDI), polymethylene polyphenyl isocyanate (crude MDI), and the like.

Examples of the aliphatic polyisocyanate include aliphatic diisocyanates having 6 to 10 carbon atoms, and the like. Specific examples thereof include 1,6-hexamethylene diisocyanate, lysine diisocyanate, and the like.

For the flexible polyurethane foam, TDI or MDI is preferable, and for a seat pad for an automobile or a transportation vehicle described later, it is more preferable to use a mixture of TDI and MDI, or use MDI or TDI only.

Examples of the alicyclic polyisocyanate include alicyclic diisocyanates having 6 to 16 carbon atoms, and the like. Specific examples thereof include isophorone diisocyanate, 4,4'-dicyclohexylmethane diisocyanate, norbornane diisocyanate, and the like.

Examples of the araliphatic polyisocyanate include araliphatic diisocyanates having 8 to 12 carbon atoms, and the like. Specific examples thereof include xylylene diisocyanate, α,α,α',α'-tetramethylxylylene diisocyanate, and the like.

Specific examples of the modified polyisocyanate include urethane-modified MDI, carbodiimide-modified MDI, and the like.

The equivalent ratio between a hydroxyl group in the polyol and an isocyanate group in the polyisocyanate (isocyanate group/hydroxyl group) is preferably 0.5 to 1.5, more preferably 0.6 to 1.4, and even more preferably 0.7 to 1.3.

In preparation of the polyol composition, each component may be mixed by a known method. Thereafter, the polyol composition and the polyisocyanate are mixed to obtain a pre-foaming mixture, which is then subjected to foam molding to obtain a flexible polyurethane foam.

A specific application of the polyurethane of the present invention is not particularly limited. For example, in a case where the polyurethane of the present invention is the flexible urethane foam, the polyurethane can be suitably used for various molded articles, such as a seat pad of an automobile or a transport vehicle, bedding such as mattresses and pillows, women's undergarments such as brassieres and brassiere pads, and furthermore, a cover for chair or sofa legs, a dish coaster, a flooring material, a table sheet, a coaster, other miscellaneous goods for preventing damage and the like. The polyurethane can be particularly suitably used as a seat pad of an automobile or a transport vehicle.

### <<Polyurethane (2)>>

According to another aspect of the present invention, there is provided a polyurethane having the following characteristics. That is, the polyurethane contains:
(1) an amine polymer with amino group-containing repeating units, and
(2) 5 to 100 ppm a boron hydride compound,
(3) in which a generation amount of acetaldehyde measured by a method according to JASO M902:2007 is 0.4 µg/piece or less.

The amount of the amine polymer in the polyurethane of the present embodiment is generally an amount corresponding to the amount of the amine polymer contained in the aldehyde scavenger for polyurethanes. In view of this, the amount of the amine polymer is not particularly limited as long as the deterioration in the physical properties of the polyurethane can be suppressed, but is usually 70 to 770 ppm, preferably 200 to 770 ppm, and more preferably 300 to 770 ppm, with respect to the total mass of the polyurethane.

The boron hydride compound contained in the polyurethane of the present embodiment includes: the sodium borohydride (NaBH₄) used as the reducing agent described above; and boric acid B(OH)₃ generated as a result of oxidation of the sodium borohydride, which is caused by the reduction of aldehydes and the like by the sodium borohydride. The amount of the boron hydride compound relative to the total mass of the polyurethane is preferably 5 to 100 ppm, more preferably 10 to 70 ppm, and particularly preferably 20 to 40 ppm.

An amount of the above-described boron hydride compound can be measured as a boron concentration by ICP optical emission spectrometry.

Further, in the polyurethane of the present embodiment, a generation amount of formaldehyde and acetaldehyde measured by a method according to JASO M902:2007 is preferably 0.4 µg/piece or less, and more preferably 0.3 µg/piece or less. Details of the measurement method will be described later.

The generation amount of the aldehydes is most preferably 0, but a low generation amount is tolerable as long as no harm is expected. In view of this, the lower limit of the generation amount of the aldehydes may be 0 µg/piece or more, or may be 0.1 µg/piece or more.

As the combination of the upper limit values and the lower limit values, for example, the generation amount may be 0 µg/piece to 0.4 µg/piece, or 0.1 µg/piece to 0.3 µg/piece.

In the polyurethane of the present embodiment, a wet heat compression set measured according to JIS K 6400 is preferably 30 % or less, more preferably 25 % or less, and even more preferably 23 % or less.

The lower limit of the wet heat compression set is not particularly limited, and may be, for example, 1 % or more, 3 % or more, or 5 % or more.

As the combination of the upper limit values and the lower limit values, for example, the wet heat compression set may be 1 % or more and 30 % or less, 3 % or more and 25 % or less, or 5 % or more and 23 % or less.

The method for producing the polyurethane of the present embodiment is not particularly limited as long as the above requirements are satisfied, but, for example, the production can be performed by the method for producing the above-described polyurethane (1) according to the present invention.

### [Examples]

Hereinbelow, the present invention will be described in more detail with reference to the Examples which, however, should not be construed as limiting the present invention.

### [Reference Example 1] (Control)

A mixed solution containing a component other than a polyisocyanate (polyol composition for polyurethane production) and a polyisocyanate were mixed with a ratio shown in Table 1, thereby preparing a pre-foaming solution (in the table, the unit for the amounts of ingredients is parts by mass unless otherwise specified). In this process, the solution temperature of the pre-foaming solution for polyurethane was set to 25 °C. Next, immediately after preparation of the above pre-foaming solution, the solution was foamed and cured in a mold with its temperature set at 60 °C, followed by demolding the resulting product, thereby obtaining a urethane foam for a seat pad. The pre-foaming solution was poured into the mold to perform foam molding to produce a seat pad. The performance of each of the obtained seat pads was evaluated by a measurement method that will be described later. The results are shown in Table 3.

**[Table 1]**

| Raw materials | Amount (Part by mass) |
|---|---|
| Polyether polyol | 70 |
| Polymer polyol | 30 |
| Gelling catalyst | 0.4 |
| Blowing catalyst | 0.1 |
| Foam stabilizer | 1.0 |
| Aldehyde scavenger | See Tables 3 and 4 |
| Water | 3.8 |
| Polyisocyanate | 45 |

Specifics of the raw materials shown in Table 1 are as follows.
- Polyether polyol: A polyether polyol having a hydroxyl value of 34 which is the polyether polyol A (SANNIX FA-703, manufactured by Sanyo Chemical Industries, Ltd.)
- Polymer polyol: A polymer polyol having a hydroxyl value of 23 (SANNIX KC-855, manufactured by Sanyo Chemical Industries, Ltd.)
- Gelling catalyst: A mixture of triethylenediamine (TEDA) (33 % by mass) and dipropylene glycol (DPG) (67 % by mass) (TEDA-L33, manufactured by TOSOH CORPORATION)
- Blowing catalyst: A mixture of bis(2-dimethylaminoethyl)ether (BDMAEE) (70 % by mass) and dipropylene glycol (DPG) (30 % by mass) (TOYOCAT-ET, manufactured by TOSOH CORPORATION)
- Foam stabilizer: A silicone foam stabilizer (Niax silicone L-3627, manufactured by Momentive Performance Materials Inc.)
- Polyisocyanate: A mixture of TDI (80 % by mass) and MDI (20 % by mass), NCO = 44.8% (COSMONATE TM-20, manufactured by Mitsui Chemicals & SKC Polyurethanes)

Aldehyde scavengers having compositions shown in Table 2 were prepared as follows.
- SBH: Sodium borohydride (Wako Pure Chemical Industries, Ltd.)
- NaOH: Sodium hydroxide (Wako Pure Chemical Industries, Ltd.)
- Diethanolamine (manufactured by NIPPON SHOKUBAI CO., LTD.)
- Polyethyleneimine: molecular weight 600, pH (5 % aqueous solution) 10 to 12

Aldehyde scavenger A: A mixture of 7.48 parts by mass of water, 0.4 parts by mass of NaOH, 2.12 parts by mass of SBH, 10 parts by mass of polyethyleneimine, and 60 parts by mass of diethanolamine
Aldehyde scavenger B: A mixture of 7.48 parts by mass of water, 0.4 parts by mass of NaOH, 2.12 parts by mass of SBH, 20 parts by mass of polyethyleneimine, and 50 parts by mass of diethanolamine
Aldehyde scavenger C: A mixture of 7.48 parts by mass of water, 0.4 parts by mass of NaOH, 2.12 parts by mass of SBH, 30 parts by mass of polyethyleneimine, and 40 parts by mass of diethanolamine
Aldehyde scavenger D: A mixture of 7.48 parts by mass of water, 0.4 parts by mass of NaOH, 2.12 parts by mass of SBH, 40 parts by mass of polyethyleneimine, and 30 parts by mass of diethanolamine
Aldehyde scavenger E: A mixture of 7.48 parts by mass of water, 0.4 parts by mass of NaOH, 2.12 parts by mass of SBH, 50 parts by mass of polyethyleneimine, and 20 parts by mass of diethanolamine
Aldehyde scavenger F: A mixture of 7.48 parts by mass of water, 0.4 parts by mass of NaOH, 2.12 parts by mass of SBH, 60 parts by mass of polyethyleneimine, and 10 parts by mass of diethanolamine
Aldehyde scavenger G: A mixture of 7.48 parts by mass of water, 0.4 parts by mass of NaOH, 2.12 parts by mass of SBH, and 70 parts by mass of polyethyleneimine
Aldehyde scavenger H: A mixture of 4.80 parts by mass of water, 0.4 parts by mass of NaOH, and 1.20 parts by mass of SBH
Aldehyde scavenger I: A mixture of 7.48 parts by mass of water, 0.4 parts by mass of NaOH, and 2.12 parts by mass of SBH
Aldehyde scavenger J: A mixture of 8.00 parts by mass of water, 2.00 parts by mass of SBH, and 70 parts by mass of polyethyleneimine
Aldehyde scavenger K: A mixture of 7.48 parts by mass of water, 0.4 parts by mass of NaOH, 2.12 parts by mass of SBH, and 70 parts by mass of diethanolamine
Aldehyde scavenger L: A mixture of 17.00 parts by mass of water, 3.0 parts by mass of NaOH, 3.0 parts by mass of SBH, 45.0 parts by mass of polyethyleneimine, and 32.0 parts by mass of diethanolamine
Aldehyde scavenger M: A mixture of 1.80 parts by mass of water, 0.6 parts by mass of NaOH, 10.0 parts by mass of SBH, 50.0 parts by mass of polyethyleneimine, and 37.5 parts by mass of diethanolamine
Aldehyde scavenger N: A mixture of 0.90 parts by mass of water, 0.3 parts by mass of NaOH, 3.0 parts by mass of SBH, 55.0 parts by mass of polyethyleneimine, and 40.5 parts by mass of diethanolamine
Aldehyde scavenger O: A mixture of 1.80 parts by mass of water, 0.6 parts by mass of NaOH, 0.1 parts by mass of SBH, 56.0 parts by mass of polyethyleneimine, and 41.5 parts by mass of diethanolamine

In preparing the aldehyde scavengers A to O, stirring was appropriately performed with a stirrer to dissolve SBH. The aldehyde scavengers A to O were each transferred to a 20 mL plastic bottle, which was then capped and stored at room temperature. One day, two days, and seven days after the preparation of the aldehyde scavengers, the lids of the plastic bottles were opened, and examination was made as to whether or not gas generation occurred.

Table 2 shows the amounts of the components of the aldehyde scavengers A to O, each with respect to the total mass of the aldehyde scavenger. Hereinafter, PEI denotes polyethyleneimine, and DEOA denotes diethanolamine.

**[Table 2]**

| Aldehyde scavenger | Water | NaOH | SBH | PEI | DEOA |
|---|---|---|---|---|---|
| | % by mass with respect to the total mass of aldehyde scavenger | | | | |
| A | 9.35 | 0.5 | 2.65 | 12.5 | 75.0 |
| B | 9.35 | 0.5 | 2.65 | 25.0 | 62.5 |
| C | 9.35 | 0.5 | 2.65 | 37.5 | 50.0 |
| D | 9.35 | 0.5 | 2.65 | 50.0 | 37.5 |
| E | 9.35 | 0.5 | 2.65 | 62.5 | 25.0 |
| F | 9.35 | 0.5 | 2.65 | 75.0 | 12.5 |
| G | 9.35 | 0.5 | 2.65 | 87.5 | 0 |
| H | 48.00 | 40.0 | 12.00 | 0 | 0 |
| I | 74.80 | 4.0 | 21.20 | 0 | 0 |
| J | 10.00 | 0 | 2.50 | 87.5 | 0 |
| K | 9.35 | 0.5 | 2.65 | 0 | 87.5 |
| L | 17.00 | 3.0 | 3.00 | 45.0 | 32.0 |
| M | 1.80 | 0.6 | 10.00 | 50.0 | 37.5 |
| N | 0.90 | 0.3 | 3.00 | 55.0 | 40.5 |
| O | 1.80 | 0.6 | 0.10 | 56.0 | 41.5 |

### [Examples 1 to 18 and Comparative Examples 1 to 5]

Urethane foams for seat pads were obtained in the same manner as in Reference Example 1 except that the aldehyde scavengers A to O shown in Table 2 were added to the respective polyol compositions. The performance of each of the obtained seat pads was evaluated by a measurement method that will be described later. The results are shown in Table 3 and Table 4. In Tables 3 and 4, the amounts of NaOH, SBH, PEI and DEOA are the amounts each with respect to the total mass of the polyol in the polyol composition used for producing the urethane foam for a seat pad. In Tables 3 and 4, the number of day(s) elapsed from the preparation represents the storage period from the preparation of the aldehyde scavenger to the time of production of the seat pad using the urethane foam. The day "0" indicates that the aldehyde scavenger was used immediately after its preparation in the production of the urethane foam for a seat pad. "FA" and "AA" respectively represent the amounts of formaldehyde and acetaldehyde generated, which were analyzed by the measurement methods described below.

Each of the thus prepared aldehyde scavengers was transferred to a 20 mL plastic bottle, which was then capped and stored at room temperature to examine the storage stability. The storage stability of each of the aldehyde scavengers was evaluated according to the following criteria, where the ratings "A" and "B" indicate that the product was acceptable. In addition, when an increase in the internal pressure was found when the lid of the plastic bottle was opened, such an increase was judged to indicate the occurrence of gas generation.

### (Evaluation criteria)

A: No gas generation occurred even 7 days after the preparation of the aldehyde scavenger.
B: Occurrence of gas generation was confirmed 2 days after the preparation of the aldehyde scavenger.
C: Occurrence of gas generation was confirmed 1 day after the preparation of the aldehyde scavenger.

### <Measurement method of foam density>

A volume and mass were measured with respect to a test piece having a size of 10 cm long × 10 cm wide × 7 cm thick by a method according to JIS K 6400, and a foam density was calculated (number of samples: n = 2).

Table 3 shows the foam densities in Examples 1 to 11, Reference Example 1, and Comparative Examples 1 to 4, and Table 4 shows the foam densities in Examples 12 to 18 and Comparative Example 5.

### <Measurement of amounts of formaldehyde and acetaldehyde generated>

The amounts of formaldehyde and acetaldehyde generated were measured using a test piece having a size of 10 cm long × 10 cm wide × 7 cm thick by a method according to JASO M902:2007.

Table 3 shows the amounts of formaldehyde and acetaldehyde generated in Examples 1 to 11, Reference Example 1, and Comparative Examples 1 to 4, and Table 4 shows the amounts of formaldehyde and acetaldehyde generated in Examples 12 to 18 and Comparative Example 5.

### <Durability against wet heat (WET SET) and wet heat compression set (%)>

Measurement was performed according to JIS K 6400. For the measurement, a piece having a size of 50 × 50 × 25 mm was cut out from a core section of the polyurethane foam-molded product, and used as a test piece. The test piece was compressed to a thickness of 50 %, placed between parallel-plane plates, and left to stand for 22 hours under conditions of 50 °C and 95 %RH. After left to stand for 22 hours, the test piece was taken out, and a thickness thereof was measured after 30 minutes. The compression set was measured by comparison of the measured thickness with the value of the thickness before the test, and this compression set was defined as the wet heat compression set.

Table 3 shows the WET SET values in Examples 1 to 11, Reference Example 1, and Comparative Examples 1 to 4, and Table 4 shows the WET SET values in Examples 12 to 18 and Comparative Example 5.

**[Table 3]**

| | Aldehyde scavenger | Day(s) after preparation | Amount | NaOH | SBH | PEI | DEOA | Foam density | FA | AA | WETSET | Storage stability |
|---|---|---|---|---|---|---|---|---|---|---|---|---|
| | | Day | Part by mass | Amount (ppm) with respect to the amount of polyol | | | | kg/m³ | *µ*g/piece | *µ*g/piece | % | |
| Reference Example 1 | None | - | 0 | 0 | 0 | 0 | 0 | 50 | 0.7 | 0.9 | 22.6 | - |
| Example 1 | A | 0 | 0.120 | 6 | 31.8 | 150 | 900 | 50 | 0.0 | 0.4 | 21.5 | B |
| Example 2 | B | 0 | 0.120 | 6 | 31.8 | 300 | 750 | 50 | 0.0 | 0.4 | 21.7 | B |
| Example 3 | C | 0 | 0.120 | 6 | 31.8 | 450 | 600 | 50 | 0.0 | 0.3 | 21.4 | B |
| Example 4 | D | 0 | 0.120 | 6 | 31.8 | 600 | 450 | 50 | 0.0 | 0.3 | 22.0 | A |
| Example 5 | E | 0 | 0.120 | 6 | 31.8 | 750 | 300 | 50 | 0.0 | 0.3 | 22.1 | A |
| Example 6 | F | 0 | 0.120 | 6 | 31.8 | 900 | 150 | 50 | 0.0 | 0.3 | 22.1 | A |
| Example 7 | G | 0 | 0.120 | 6 | 31.8 | 1050 | 0 | 50 | 0.0 | 0.3 | 22.5 | A |
| Example 8 | L | 0 | 0.100 | 30 | 30.0 | 450 | 320 | 50 | 0.0 | 0.3 | 22.7 | A |
| Example 9 | M | 0 | 0.100 | 6 | 100.0 | 500 | 375 | 50 | 0.0 | 0.3 | 22.8 | A |
| Example 10 | N | 0 | 0.100 | 3 | 30.0 | 550 | 405 | 50 | 0.0 | 0.3 | 21.4 | B |
| Example 11 | O | 0 | 0.100 | 6 | 10.0 | 560 | 415 | 50 | 0.1 | 0.4 | 21.3 | A |
| Comparative Example 1 | H | 0 | 0.026 | 104 | 31.2 | 0 | 0 | 50 | 0.5 | 0.5 | 29.4 | A |
| Comparative Example 2 | I | 0 | 0.015 | 6 | 31.8 | 0 | 0 | 50 | 0.5 | 0.5 | 21.8 | C |
| Comparative Example 3 | J | 0 | 0.125 | 0 | 31.3 | 1095 | 0 | 50 | 0.0 | 0.3 | 22.7 | C |
| Comparative Example 4 | K | 0 | 0.120 | 6 | 31.8 | 0 | 1050 | 50 | 0.5 | 0.5 | 21.7 | B |

**[Table 4]**

| | Aldehyde scavenger | Day(s) after preparation | Amount | NaOH | SBH | PEI | DEOA | Foam density | FA | AA | WETSET | Storage stability |
|---|---|---|---|---|---|---|---|---|---|---|---|---|
| | | Day | Part by mass | Amount (ppm) with respect to the amount of polyol | | | | kg/m³ | *µ*g/piece | *µ*g/piece | % | |
| Example 12 | D | 7 | 0.120 | 6 | 31.8 | 600 | 450 | 50 | 0.0 | 0.3 | 22.1 | A |
| Example 13 | E | 7 | 0.120 | 6 | 31.8 | 750 | 300 | 50 | 0.0 | 0.3 | 22.1 | A |
| Example 14 | F | 7 | 0.120 | 6 | 31.8 | 900 | 150 | 50 | 0.0 | 0.3 | 22.1 | A |
| Example 15 | G | 7 | 0.120 | 6 | 31.8 | 1050 | 0 | 50 | 0.0 | 0.3 | 22.7 | A |
| Example 16 | L | 7 | 0.100 | 30 | 30.0 | 450 | 320 | 50 | 0.0 | 0.3 | 22.7 | A |
| Example 17 | M | 7 | 0.100 | 6 | 100.0 | 500 | 375 | 50 | 0.0 | 0.3 | 22.7 | A |
| Example 18 | O | 7 | 0.100 | 6 | 10.0 | 560 | 415 | 50 | 0.1 | 0.4 | 21.4 | A |
| Comparative Example 5 | H | 7 | 0.026 | 104 | 31.2 | 0 | 0 | 50 | 0.5 | 0.5 | 29.5 | A |

### <Evaluation Results>

In Examples 1 to 11 each using an aldehyde scavenger (for polyurethanes) containing a reducing agent, a basic compound, an amine polymer having amino group-containing repeating units, and water, the aldehyde scavenger was able to be relatively stably stored. As a result, in these Examples, the generations of both formaldehyde and acetaldehyde were significantly reduced as compared to Reference Example 1 (control) not using an aldehyde scavenger. In these Examples, the durability against wet heat (WET SET) and the wet heat compression set were equal to or higher than those in Reference Example 1, and urethane foams free from deterioration in physical properties were obtained. Similarly in Examples 12 to 18 in which the aldehyde scavengers D, E, F, G, L, M, and O having particularly high storage stability were used when 7 days had passed after the preparation, the generations of both formaldehyde and acetaldehyde were significantly reduced, and urethane foams free from deterioration in physical properties were obtained.

On the other hand, in Comparative Examples 1, 2 and 4 using aldehyde scavengers containing the reducing agent but not containing the amine polymer, the effect of reducing the generations of formaldehyde and acetaldehyde was inferior. In Comparative Example 1 in which the amount of sodium hydroxide as the basic compound was large, the values of durability against wet heat (WET SET) and wet heat compression set deteriorated considerably, and the deterioration in physical properties of the urethane foam was also observed. In Comparative Example 2, it was confirmed that the storage stability of the aldehyde scavenger was extremely low. In Comparative Example 3 using an aldehyde scavenger containing no basic compound, it was confirmed that the storage stability of the aldehyde scavenger was extremely low. In Comparative Example 5 in which the aldehyde scavenger H containing no amine polymer was used when 7 days had passed from the preparation, the deterioration in physical properties of the urethane foam was observed as in Comparative Example 1.

From the above results, it was confirmed that the use of the aldehyde scavenger to which the present invention was applied enables stable storage of a reducing agent, and suppression of deterioration of physical properties of a urethane foam.

The elements, combinations thereof, etc. that are explained above in connection with the specific embodiments of the present invention are mere examples, and various alterations such as addition, omission and substitution of any components, etc. may be made as long as such alterations do not deviate from the gist of the present invention.

### [Industrial Applicability]

The aldehyde scavenger for polyurethanes according to the present invention can be widely used as an additive for aldehyde reduction in various polyurethane products.

## Claims

1. An aldehyde scavenger for polyurethanes, comprising a reducing agent, a basic compound, an amine polymer having amino group-containing repeating units, and water.

2. The aldehyde scavenger for polyurethanes according to claim 1, wherein the reducing agent is a complex metal hydride.

3. The aldehyde scavenger for polyurethanes according to claim 2, wherein the complex metal hydride is sodium borohydride.

4. The aldehyde scavenger for polyurethanes according to any one of claims 1 to 3, wherein the amine polymer is at least one amine polymer selected from the group consisting of polyvinylamine, polyvinylalkylamines, polyalkyleneimines, polyaniline, and salts thereof.

5. The aldehyde scavenger for polyurethanes according to any one of claims 1 to 4, wherein the amine polymer is polyethyleneimine.

6. The aldehyde scavenger for polyurethanes according to any one of claims 1 to 5, which further comprises an amine compound having two or more active hydrogen groups.

7. The aldehyde scavenger for polyurethanes according to claim 6, wherein the amine compound is diethanolamine.

8. A polyurethane which is a product of a reaction between:
a polyol composition comprising a polyol, a catalyst, and the aldehyde scavenger for polyurethanes according to any one of claims 1 to 7; and
a polyisocyanate.

9. The polyurethane according to claim 8, wherein the amount of the amine polymer in the polyol composition is 0.01 to 0.11 % by mass with respect to the total mass of the polyol composition.

10. The polyurethane according to claim 8 or 9, which is a polyurethane foam.

11. The polyurethane according to claim 8 or 9, which is a flexible polyurethane foam.

12. The polyurethane according to claim 8 or 9, which is a seat pad for vehicles.

13. A method for producing a polyurethane, comprising reacting a polyol composition which comprises a polyol, a catalyst, and the aldehyde scavenger for polyurethanes according to any one of claims 1 to 7 with a polyisocyanate.
